# EUROPEAN PATENT APPLICATION

(11) **EP 1 928 076 A2**
(43) Date of publication of application: **04.06.2008**
(21) Application number: 07386022.3
(22) Date of filing: 01.11.2007
(51) Int. Cl.: H02M 1/08

(54) **Circuit controlling the firing angle of semiconductors**

(30) Priority: 29.11.2006 GR 20060100650
(71) Applicant: Kofinas, Spiros, 16675 Glyfada (GR)
(72) Inventor: Kofinas, Spiros, 16675 Glyfada (GR)

(57) **Abstract**

This invention refers to a circuit controlling the triggering angle of thyristors in single, three-phase or polyphase rectifying bridges, and also for the triggering control of triacs.

It uses optocouplers (O₁,O'₁) as switches instead of transformers for the synchronization of the mains supply voltages with the triggering angle of thyristors (Th₁,Th₂,...) or triacs, simplifying considerably the control circuit and minimizing the production cost. The optocouplers (O₁,O'₁) can be opto-transistors, opto-triacs or optothyristors.

Basic characteristic of this circuit is the isolation it provides in the electronic control circuit between the mains voltages and the rectification voltages.

## Description

The present invention controls the firing angle of thyristors in single phase, three-phase or polyphase rectifying bridges, it may also be used for the firing angle control of triacs.

The classical way of controlling the firing angle of thyristors was through a signal transformer for the synchronization with the power supply and isolation of the control circuit from the supply voltages. This way made the manufacturing of the control circuit bulky and expensive especially in three phase and polyphase systems.

This new inventive step lies in the use of optocouplers as switches for the synchronization of the supply sinusoidal waveform with the thyristor or triac firing angle.

Some of the applications of this invention could be:
- The speed control of D.C. machines
- Rectifiers
- Temperature control
- Speed control of induction motors through voltage control

These and other characteristics and advantages of the present invention will become clear in the following detailed description. The present invention will become clearly understood to the specialized personnel through the attached figures, in which is sufficiently presented.

In Figure 1 is shown the electronic control circuit.

In Figure 2 is shown the application of this circuit in single phase bridge.

In Figure 3 is shown the application of this circuit in three-phase bridge.

In Figure 4 is shown the application of this circuit in polyphase bridge.

In Figure 5 is shown the application of this circuit in a half controlled polyphase bridge.

In Figure 6 is shown the application of this circuit in a single phase power controller.

In Figure 7 is shown the application of this circuit in a three-phase power controller.

In Figure 8 is shown the application of this circuit in a three-phase power controller in star connection.

With reference to the accompanying drawings, we will describe indicative preferred applications of this invention.

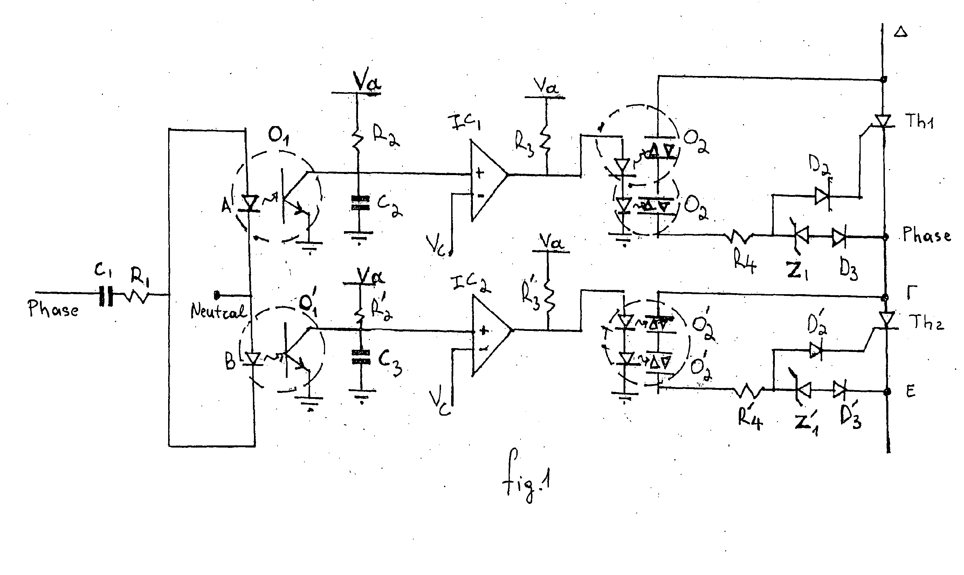

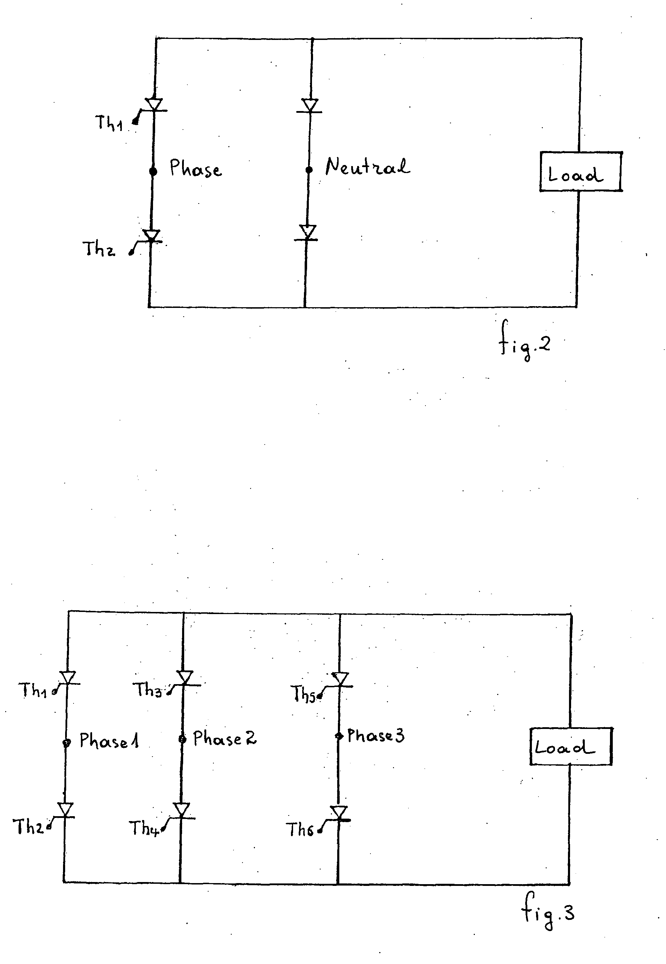

We want to synchronize and vary the firing angle in thyristors Th₁, Th₂ Fig.1, which could be parts of a single phase according to Figure 2 or polyphase according to Figures 3, 4, 5 bridges.

The sinusoidal supply waveform is applied between the phase and neutral in Figure 1. A current will pass from the capacitor C₁ and resistor R₁ and for the positive part of the waveform through the optodiode A will reach the neutral. The current of the optodiode A will turn on the optotransistor A and the capacitor C₂ will discharge through the optotransistor with the voltage across it remaining zero throughout the positive part of the applied sinusoidal waveform.

The integrated circuits IC₁ and IC₂ are voltage comparators whose voltage Vc is the control voltage of the triggering angle of the thyristors. While the voltage of the capacitor C₂ is smaller than Vc the output voltage of IC₁ will be zero and the current through R₃ (IC₁) will be deviated from the optodiodes of the optotriacs which will not conduct for the whole positive half-period of the applied sinusoidal phase signal.

In the opposite, in the same positive half-period between phase-neutral the optodiode B in O'₁ will not conduct and the capacitor C₃ will charge through R'₂. When the voltage in C₃ becomes greater than Vc the output voltage of IC₂ will become positive and the current through R'₃ will go through the optodiode O'₂ switching the optotriac O'₂. In point C is applied the same phase or a transformed voltage of the same polarity as in the capacitor C₁ so that point C has higher potential from point E. Current through the optotriac O'₂ will pass through R'₄ - D'₂ in the gate of the thyristor Th₂ which will turn on because the zener Z'₁ biases positively the gate of thyristor Th₂.

On the contrary, during the negative half circle of the supply O'₁ will conduct and O₁ will not conduct charging capacitor C₂ and repeating the above procedure resulting in a controllable triggering signal of thyristor Th₁.

Thyristors Th₁ - Th₂ could be connected in a single phase bridge arrangement as in Figure 2 so that the capacitor C₁ of Figure 1 must be replaced by a resistor so that there will be no phase displacement between the synchronizing circuit and the phase-neutral supply voltage.

According to another application of this invention, this circuit can drive a three-phase thyristor bridge as in Fig.3 with the drive circuit being repeated for each thyristor pair. So, three drive circuits are required for driving the thyristor pairs Th₁ - Th₂, Th₃ - Th₄, Th₅ - Th₆.

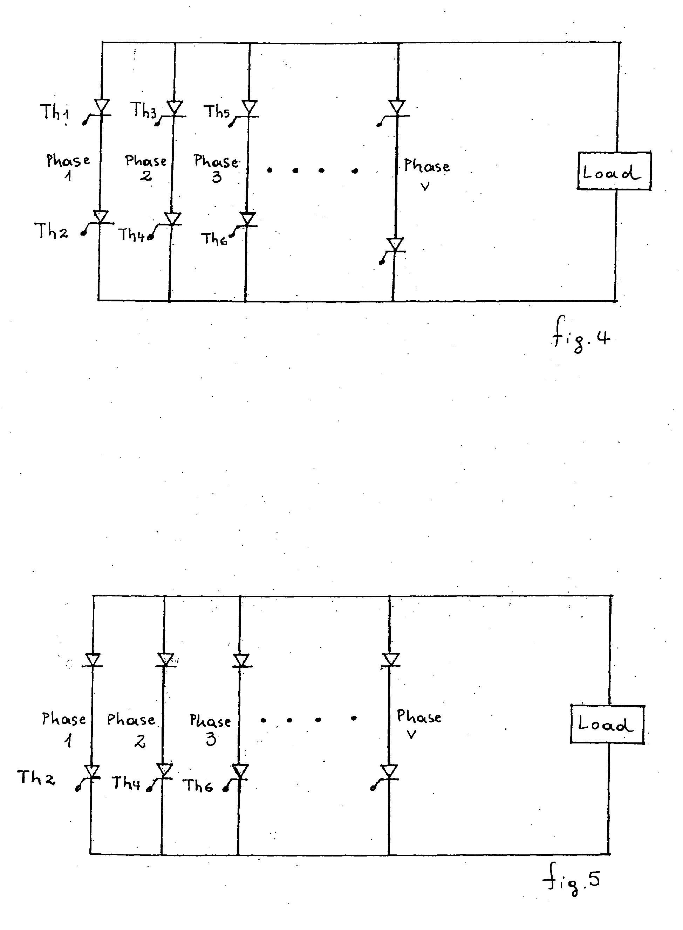

Polyphase rectifying systems can be driven by the above circuit repeating the circuit for each thyristor pair Fig.4.

If we want to use half controlled bridges where the negative potential of the d.c. voltage output is connected to diodes as in Fig.5 then, only half of the above circuit is required for driving each thyristor. Clearly, only the circuit connected with O'₁ is required without the use of the circuit connected to O₁. We do the opposite if the diodes are connected to the positive side of the rectifying bridge.

Another advantage of this circuit is the isolation it provides between the control circuit, the supply voltages and rectified voltage. If a transformer is used between the rectification thyristors and mains supply for reasons of isolation, multiplication or division of the mains supply voltages, the three voltages of mains supply - control circuit - output voltage are isolated.

The use of the capacitor C₁ in Fig.1 is only for the polyphase rectification systems, where the phase displacement between current and voltage is tolerable and it was done because resistor usage would result in unwanted losses in the resistor which would replace the capacitor C₁ for the correct biasing of the optodiode O₁.

Resistor R₁ was used for minimizing the transient current, which would flow through the optodiode O₁ at the instant of switching on the circuit.

The optotriacs O₂, O'₂ can be replaced with optothyristors or optotransistors for low voltages. Their number is dependent from the voltage between the anode and cathode of each thyristor.

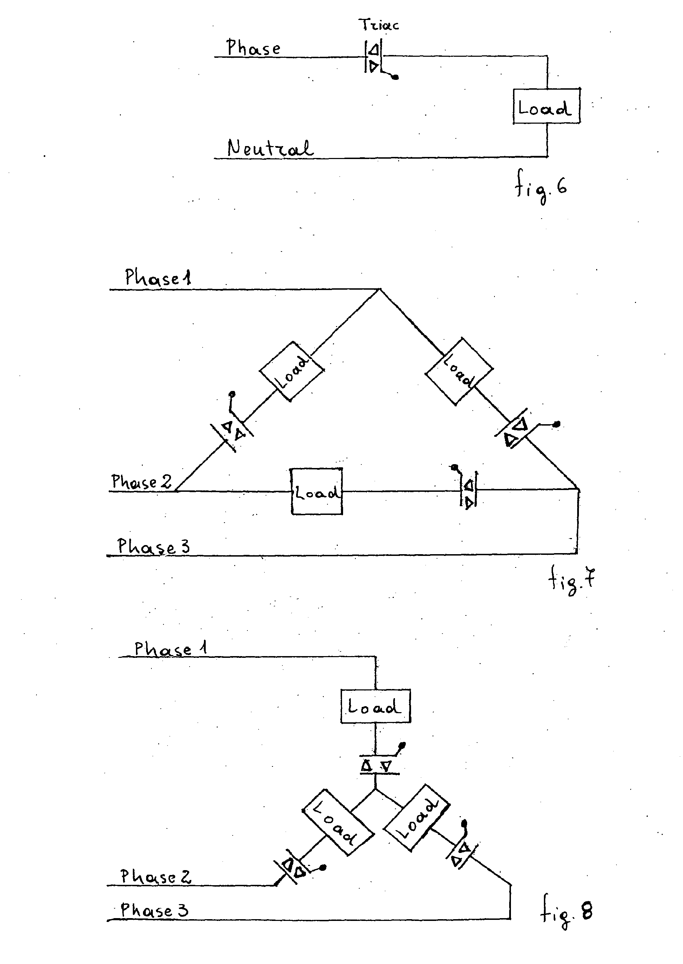

The innovation of this circuit is in the use of the optocouplers O₁, O'₁ as switches instead of transformers thus simplifying considerably the control circuit and minimizing the production cost. The optocouplers can be optotransistors, optotriacs or optothyristors. For circuits, as in Figures 6, 7, and 8 where we want to control the firing angle of the triacs we can use the same circuit as to that described with the points D and E of Fig. 1 being at the same point at the cathode of each triac, with each triac behaving as two thyristors connected back to back with the cathodes of diodes D'₂, D₂ being connected to the gate of each triac and diodes D₃, D'₃ in the cathode of each triac. So we can control the mains three phase or single phase power to a load.

It must be pointed out that the description of the invention was through indicative examples of applications to which is not limited. So, any change or modification regarding the figures, sizes, dimensions, materials used, manufacturing components and assembly, since they do not consist in a new inventive step and technical progress of the already known must be considered as being compliant with the purposes and intentions of this invention.

## Claims

1. Circuit controlling the triggering angle of semiconductors **characterized by** the control of triggering angle of thyristors in single-phase, three-phase or polyphase rectifying bridges, as it can also be used for the triggering control of triacs, the sinusoidal mains voltage is applied between phase-neutral, a current will flow through capacitor C₁ and resistor R₁ and for the positive half-cycle through optodiode A will arrive to the neutral, the current of the optodiode A will turn on the optotransistor A and C₂ will discharge through the optotransistor with the voltage across it remaining zero for all the positive half period of the mains voltage, the integrated circuits IC₁ and IC₂ are voltage comparators whose voltage Vc is the controlling voltage of the thyristor triggering angle, if the voltage of C₂ is smaller than Vc, the voltage output of IC₁ will be zero and the current through R₃ (IC₁) will be deviated from the optodiodes of the optotriacs which will not conduct for all the positive half period of the applied sinusoidal phase signal, on the contrary during the positive half period between phase - neutral the optodiode B in O'₁ will not conduct and capacitor C₃ will charge through R'₂, when the C₃ potential becomes greater than Vc the output potential of IC₂ will become positive and the current through R'₃ will pass through optodiodes O'₂ turning on the optotriac O'₂, in point C is applied the same phase or transformed voltage of same polarity as in C₁ so that point C has higher potential from point E, current through the optotriac O'₂ will flow through R'₄ - D'₂ in the gate of thyristor Th₂ which will become energized because zener Z'₁ biases positively the gate of thyristor Th₂, in contrary, during the negative mains half circle O'₁ will conduct and O₁ will not conduct charging capacitor C₂ thus repeating the above procedure resulting in a controllable triggering signal of thyristor Th₁.

2. Semiconductor triggering angle control, according to claim 1, **characterized by** the fact that thyristors Th₁ - Th₂ can be connected in single phase rectifying bridge, where capacitor C₁ must be substituted by a resistor for the elimination of phase difference between the synchronization circuit and the mains supply phase-neutral waveform.

3. Semiconductor triggering angle control according to claim 1, **characterized by** the fact that this circuit can drive a three phase thyristor bridge with the drive circuit being repeated for every two thyristors, so that three drive circuits are needed for the thyristor pairs Th₁ - Th₂, Th₃ - Th₄, Th₅ - Th₆.

4. Semiconductor triggering angle control according to claim 1, **characterized by** the fact that polyphase rectifying systems can be driven by the circuit described with the circuit being repeated for each thyristor pair.

5. Semiconductor triggering angle control according to claim 1, **characterized by** the fact that if we want to use half controlled bridges whose negative voltage output is connected with diodes, then it is enough to use half of each circuit for driving each thyristor, only the circuit connected to O'₁ without the use of that connected to O₁, we do the opposite if the diodes are connected to the positive side of the rectifying bridge.

6. Semiconductor triggering angle control according to claim 1, **characterized by** the fact that wherever we want to control the triggering angle of triacs we can use the same circuit as the one described with the points D and E being connected to the cathode of each triac, with each triac behaving as two thyristors connected back to back with the cathodes of diodes D'₂, D₂ being connected to the gate of each triac and diodes D₃, D'₃ in the cathode of each triac so that we can control the single or three phase power.

7. Semiconductor triggering angle control according to claim 1, **characterized by** the fact that it uses optocouplers O₁, O'₁ as switches instead of transformers for the synchronization of the sinusoidal mains supply voltages, with the triggering angle of thyristors or triacs, simplifying considerably the control circuit thus minimizing the production costs, and the optocouplers being optotransistors, optotriacs or optothyristors, main characteristic of the circuit is the isolation it provides to the electronic control circuit between the mains voltages and the rectified voltage, so that if a transformer is used between the rectifying thyristors and mains supply for reasons of isolation, multiplication or division of the mains voltages, the three voltages of mains - control circuit - output voltage are isolated between them and where the optotriacs O₂, O'₂ can be replaced by optothyristors or optotransistors for low voltages with their number being dependent from the voltage between the anode and cathode of each thyristor.
